(19) Europäisches Patentamt / European Patent Office / Office européen des brevets

(11) **EP 4 787 311 A1**

(12) **EUROPEAN PATENT APPLICATION**

(43) Date of publication:
**05.08.2026 Bulletin 2026/32**

(21) Application number: **26150553.1**

(22) Date of filing: **07.01.2026**

(51) International Patent Classification (IPC):
***G06T 7/593*** *(2017.01)*

(52) Cooperative Patent Classification (CPC):
**H04N 13/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.02.2025 JP 2025017150**

(71) Applicant: **Canon Kabushiki Kaisha**
**Tokyo, 146-8501 (JP)**

(72) Inventors:
• **OTSUBO, Masatoshi**
**Tokyo, 146-8501 (JP)**
• **TANAKA, Shin**
**Tokyo, 146-8501 (JP)**

(74) Representative: **TBK**
**Bavariaring 4-6**
**80336 München (DE)**

(54) **IMAGE CAPTURING APPARATUS, IMAGE CAPTURING METHOD, COMPUTER PROGRAM PRODUCT, AND STORAGE MEDIUM**

(57) An image capturing apparatus comprises an image capturing element configured to acquire two images having parallax, a contrast calculation unit configured to calculate contrast information for each predetermined region of at least one image among the two images, an exposure adjustment unit configured to perform exposure adjustment for each of the regions based on the contrast information, and a distance calculation unit configured to calculate a distance to a subject for each of the regions based on an amount of deviation of images of the region in the two images adjusted by the exposure adjustment unit.

FIG. 1

EP 4 787 311 A1

## Description

Technical Field

The present disclosure relates to an image capturing apparatus, an image capturing method, a computer program product, a storage medium, and the like.

Background

Although autopilot and autonomous driving of robots, vehicles, and the like have been progressing in recent years, in order to realize autopilot and autonomous driving of robots, vehicles, and the like, it is desired that positions of surrounding objects are detected without omission and that positions of surrounding objects are detected in short cycles.

One technology serving as this functional role is distance measurement technology using an image capturing element having an image plane phase difference. Since this technology uses an image capturing element, an object can be detected from an image captured by the image capturing element by object recognition technology, and this technology has a feature that distance to an object can be calculated from two images having parallax.

In measuring distance using the image capturing element, the contrast of an image is one of the factors affecting distance measurement accuracy. Distance measurement by the image capturing element obtains a distance to an object being imaged from two images having parallax by the principle of triangulation.

For this reason, accuracy of a deviation amount of parallax in the two images is one of the factors that determines distance measurement accuracy, and distance measurement accuracy can be ensured by a contrast above a certain level. Accordingly, in order to use distance measurement by the image capturing element for surrounding object detection, satisfaction of the following two conditions is desirable.

The first is to increase a frame rate and detect surrounding objects at short cycles. The second is that, since grasping an entire image capturing range is desired, for the entire surface within a single image to have a contrast at least a certain level is desirable.

Conventionally, it has been disclosed that contrast is related to distance measurement accuracy of the image capturing element. For example, as shown in Japanese Patent Application Laid-Open No. 2024-153347, it is disclosed that accurate detection can be performed with respect to a subject having contrast.

In contrast, in one image captured by an image capturing element, differences in contrast occur depending on a subject in the image due to differences in sun exposure, shade, reflectance of an object, a material, and the like. Since a contrast value of an object is a difference in luminance values in the object, the contrast value tends to be low in a location at which luminance is low overall, and the contrast value tends to be high in a location at which luminance is high.

In order to improve locations at which contrast values are low and distance measurement accuracy is low, when an exposure time of the image capturing element is increased and luminance values are increased, improvement in contrast values can be expected. In contrast, in a case in which luminance is already high in the same image and the image capturing element is at a saturation level, contrast conversely decreases when the exposure time is increased.

Accordingly, with respect to an image that has differences in contrast within the image, changing an exposure time for each region, rather than uniformly changing the exposure time, is required. Conventionally, as shown in Japanese Patent Application Laid-Open No. 2011-4088, a technology that performs exposure adjustment for each region is disclosed.

However, although the technology of Japanese Patent Application Laid-Open No. 2024-153347 discloses that a subject having high contrast can be measured with high accuracy, the technology of Japanese Patent Application Laid-Open No. 2024-153347 cannot reduce differences in contrast between subjects within a single image, and cannot improve distance measurement accuracy.

In the technology of Japanese Patent Application Laid-Open No. 2011-4088, although detecting luminance for each region and performing exposure adjustment according to the luminance for each region is disclosed, since the dynamic range of luminance is addressed as an issue, contrast of a single entire image is not considered.

SUMMARY

An image capturing apparatus of an embodiment of the present disclosure comprises an image capturing element configured to acquire two images having parallax, a contrast calculation unit configured to calculate contrast information for each predetermined region of at least one image among the two images, an exposure adjustment unit configured to perform exposure adjustment for each of the regions based on the contrast information, and a distance calculation unit configured to calculate a distance to a subject for each of the regions based on an amount of deviation of images of the region in the two images adjusted by the exposure adjustment unit.

Further features of the present disclosure will become apparent from the following description of embodiments with reference to the attached drawings.

BRIEF DESCRIPTION OF THE DRAWINGS

FIG. 1 is a functional block diagram showing a configuration example of an image capturing system according to a First Embodiment of the present disclosure.

FIG. 2 is a diagram showing a detailed example of a pixel unit 105 of the First Embodiment.

FIGS. 3A to 3C are schematic diagrams for explaining a configuration example of pixels of the First Embodiment.

FIGS. 4A to 4D are diagrams showing timing examples of control signals of the First Embodiment.

FIG. 5 is a diagram explaining an example of pixels employed when calculating contrast values of the First Embodiment.

FIG. 6A and FIG. 6B are diagrams explaining output format examples of distance measurement images of the First Embodiment.

FIG. 7 is a diagram showing an example of a restoration method of image signals for development and a restoration method of image signals for distance measurement of the First Embodiment.

FIG. 8 is a flowchart showing an example of a processing flow of a determination circuit 116A and a processing flow of a determination circuit 116B of the First Embodiment.

FIG. 9 is a functional block diagram showing a configuration example of an image capturing system according to a Second Embodiment.

FIG. 10A and FIG. 10B are diagrams showing an example of a method of generating image signals for development according to the Second Embodiment.

FIGS. 11A to 11C are diagrams explaining an image plane phase difference distance measurement method.

FIG. 12 is a diagram explaining image plane phase difference distance measurement of a 2×2 configuration.

FIG. 13 is a flowchart showing an example of a restoration processing flow of image signals for distance measurement according to the Second Embodiment.

DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

<First Embodiment>

Hereinafter, the First Embodiment of the present disclosure will be explained.

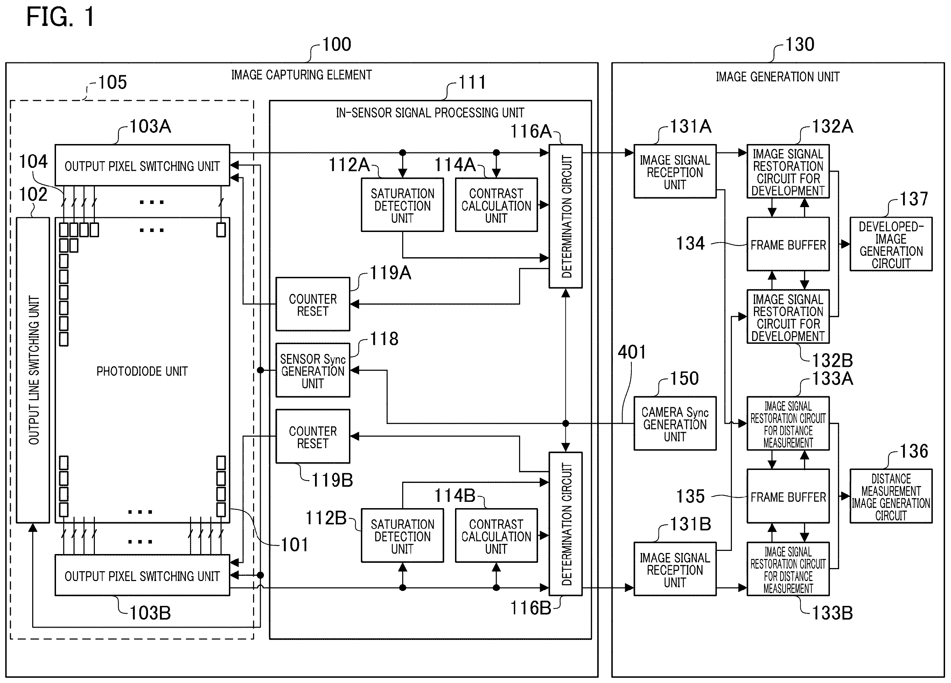

FIG. 1 is a functional block diagram showing a configuration example of an image capturing system of the First Embodiment of the present disclosure. It should be noted that some of the functional blocks shown in FIG. 1 are realized by causing a CPU and the like serving as a computer (not shown) included in the image capturing system to execute a computer program stored in a memory serving as a storage medium (not shown).

However, some or all of the functional blocks may be realized by hardware. As hardware, a dedicated circuit (ASIC), a processor (reconfigurable processor, DSP), and the like can be used.

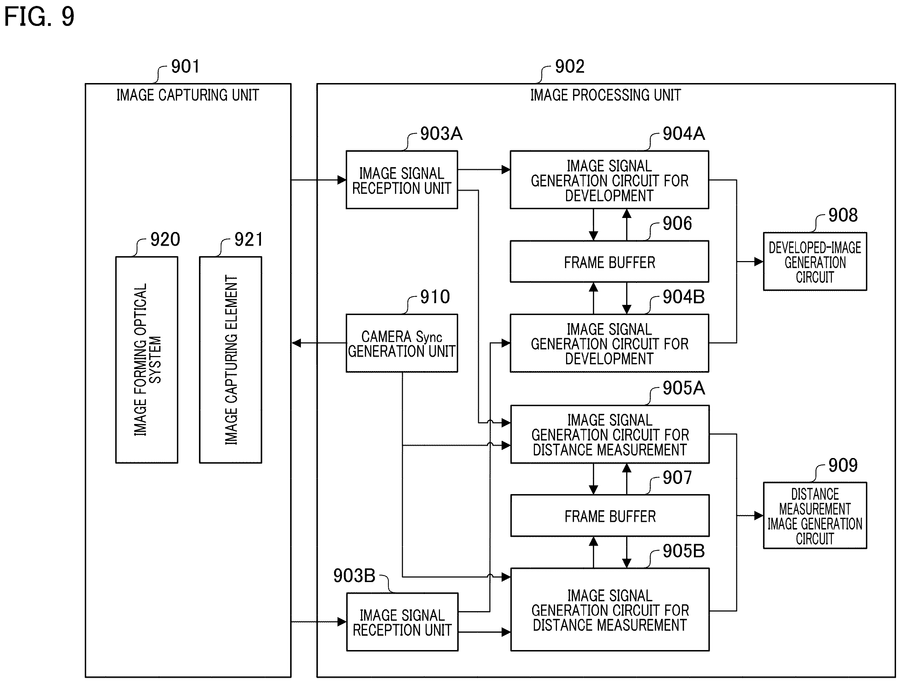

In addition, each of the functional blocks shown in FIG. 1 need not be built into the same housing, and the functional blocks may be configured by separate apparatuses connected to each other via signal paths. It should be noted that the above-described explanation with respect to FIG. 1 applies similarly to FIG. 9.

The image capturing system of FIG. 1 is, for example, a camera, and the image capturing system has an image capturing element 100 and an image generation unit 130, and the image capturing element 100 is configured by a pixel unit 105 and an in-sensor signal processing unit 111. The pixel unit 105 has a photodiode unit 101, an output line switching unit 102, an output pixel switching unit 103A, an output pixel switching unit 103B, and the like.

An image captured by an optical system (not shown) is converted into electrical data by the photodiode unit 101. Row selection or pixel selection is performed using the output line switching unit 102, the output pixel switching unit 103A, and the output pixel switching unit 103B, and pixel data is transmitted.

Next, an explanation is provided in detail following the flow of data. First, a camera VD signal 401 is generated in a camera Sync generation unit 150 in the image generation unit 130 of FIG. 1. The frame rate of the camera VD signal 401 is 30 fps.

The camera VD signal 401 transmitted to the image capturing element 100 is input to a sensor Sync generation unit 118 in the in-sensor signal processing unit 111. In the sensor Sync generation unit 118, a sensor VD signal 211 and a sensor HD signal 212 are generated from the camera VD signal 401.

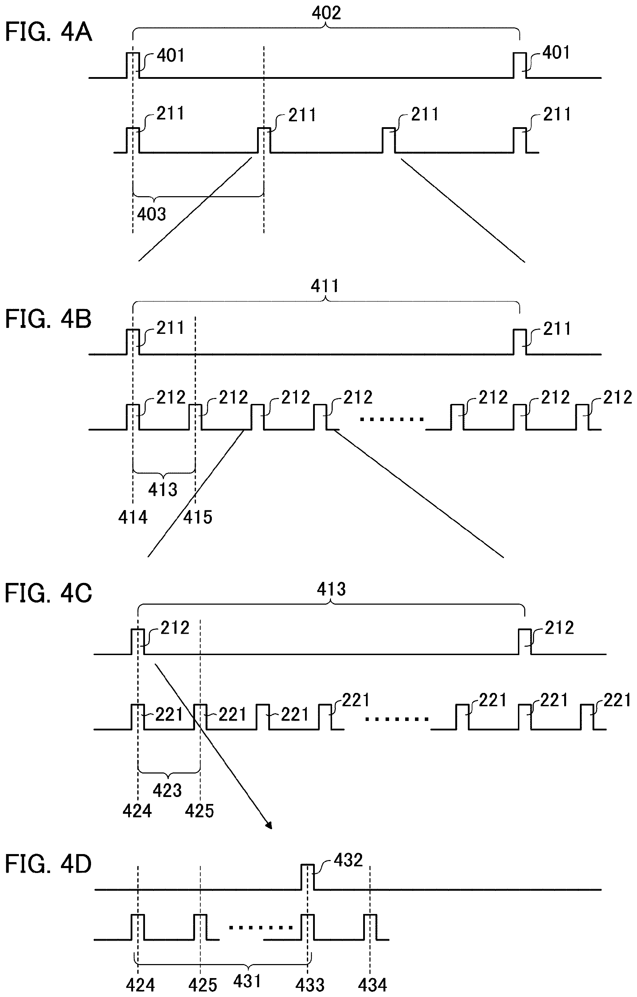

FIG. 4A is a diagram showing the timing of the camera VD signal 401 and the sensor VD signal 211. In the present embodiment, because the camera VD signal 401 has a period corresponding to 30 fps, an interval 402 is 1/30 s.

From the image capturing system, video is output every 1/30 s. Although the VD signal is normally Low active, here the VD signal is made High active for convenience of explanation. The sensor VD signal 211 is set to a frequency four times the frequency of the camera VD signal 401.

That is, an interval 403 becomes 1/120 s. Accordingly, four images are output from the pixel unit 105 during a period corresponding to output of one image as video output of the camera main body. Although specific setting values are described here with respect to frame rate or frequency, the setting values are not limited to these numerical values.

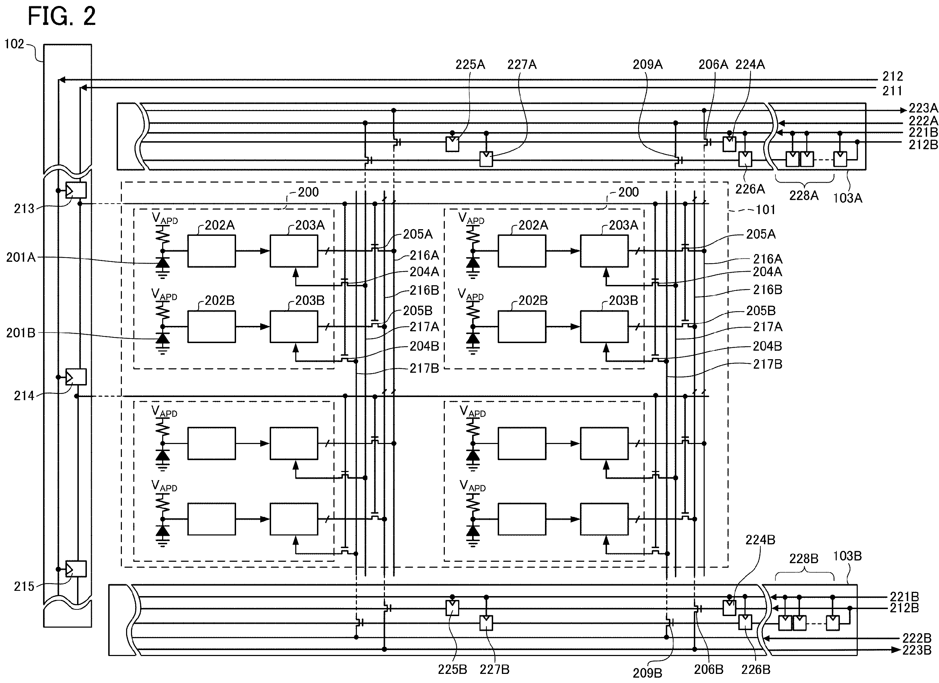

FIG. 2 is a diagram showing a detailed example of the pixel unit 105 of the First Embodiment. In FIG. 2, the photodiode unit 101, the output line switching unit 102, the output pixel switching unit 103A, and the output pixel switching unit 103B are shown in detail.

The present embodiment has a configuration for individually initializing individual pixels. Explanation will be provided below with respect to the configuration for this initialization of the pixels. In the photodiode unit 101, pixels 200 are arranged in a matrix in a vertical direction and in a horizontal direction.

Although, in the present embodiment, it is assumed that for example 4000 pixels are arranged in a vertical direction and for example 4000 pixels are arranged in a horizontal direction, in FIG. 2, for convenience of explanation, only two pixels are shown in the vertical direction and only two pixels are shown in the horizontal direction. In the pixel 200, an APD 201A and an APD 201B serving as photoelectric conversion elements are disposed. It should be noted that APD is an abbreviation for avalanche photodiode.

As shown in FIG. 2, a reverse bias voltage is applied to the APD 201A and the APD 201B via a resistor such that avalanche breakdown occurs when light is irradiated. That is, when photons collide with semiconductor atoms of the APD 201A and the APD 201B, electrons are generated, and avalanche breakdown occurs due to the electrons, and an analog voltage is temporarily generated.

A waveform shaping unit 202A and a waveform shaping unit 202B detect the analog voltage, and output a HIGH pulse if the voltage is at least a certain threshold value, and a LOW pulse if the voltage is equal to or less than the certain threshold value. That is, the waveform shaping unit 202A and the waveform shaping unit 202B convert the analog voltage into a digital pulse.

Thereby, one photon is output as one pulse signal. A counter 203A and a counter 203B count the number of pulses output from the waveform shaping unit 202A and the waveform shaping unit 202B. That is, the counter 203A and the counter 203B count the number of photons.

Because the counter value of the counter 203A and the counter value of the counter 203B become higher as illumination becomes brighter and become lower as illumination becomes darker, the counter values can be handled as pixel outputs. It should be noted that by using a sensor capable of counting photons, the sensor has characteristics that readout noise is not imparted no matter how many times readout occurs and information does not disappear from the sensor even when readout occurs. However, the pixel 200 may have a configuration using a CMOS sensor.

Although two APDs are disposed in the pixel 200 of FIG. 2, the disposition of two APDs is a structure for the purpose of acquiring two images having parallax. That is, the image capturing element of the present embodiment can execute an image capturing step of acquiring two images having parallax. An explanation will be given with respect to the image capturing step.

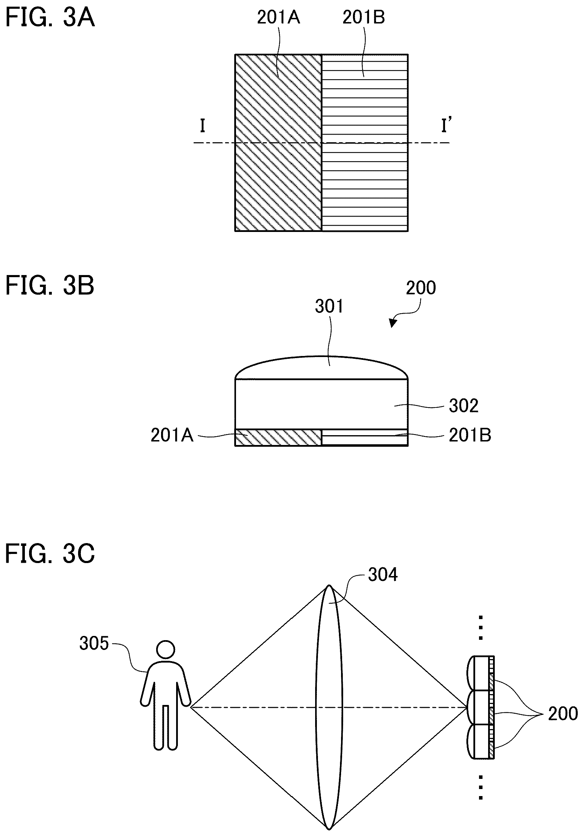

FIGS. 3A to 3C are schematic diagrams for explaining a configuration example of a pixel of the First Embodiment, and the pixel has an APD 201A and an APD 201B serving as two photoelectric conversion elements within one pixel. FIG. 3A is a top view of the pixel 200 viewed from a light incident direction.

The APD 201A and the APD 201B are vertically-elongated rectangles, and are disposed in a left-right direction. FIG. 3B is a cross-sectional diagram in an I-I' cross section of FIG. 3A. The pixel 200 is configured by a microlens 301, a light guide layer 302, the APD 201A, and the APD 201B. The light guide layer 302 includes a color filter that transmits light of a predetermined wavelength band.

FIG. 3C is a diagram showing an arrangement configuration of the pixel 200, an image forming optical system 304, and a subject 305. By adopting such a configuration, an image signal A output from the APD 201A and an image signal B output from the APD 201B can be acquired as image signals having parallax. In addition, the distance to a subject can be calculated by calculating the parallax amount (positional deviation amount).

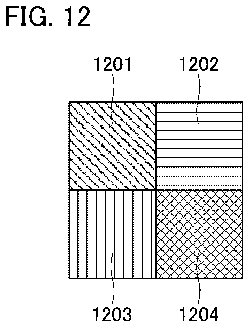

It should be noted that although the present embodiment comprises two photoelectric conversion units as shown in FIG. 3B, for example, four photoelectric conversion units can also be disposed, as shown in FIG. 12. In FIG. 12, the four photoelectric conversion units are respectively a photoelectric conversion unit 1201, a photoelectric conversion unit 1202, a photoelectric conversion unit 1203, and a photoelectric conversion unit 1204.

In FIG. 12, if the sum of the output of the photoelectric conversion unit 1201 and the output of the photoelectric conversion unit 1203 is defined as left output, and the sum of the output of the photoelectric conversion unit 1202 and the output of the photoelectric conversion unit 1204 is defined as right output, the same result as in the case of the two photoelectric conversion units described above can be obtained.

In contrast, if the sum of the output of the photoelectric conversion unit 1201 and the output of the photoelectric conversion unit 1202 is defined as upper output, and the sum of the output of the photoelectric conversion unit 1203 and the output of the photoelectric conversion unit 1204 is defined as lower output, the result is a configuration corresponding to rotation of the above-described configuration of the two photoelectric conversion units by 90 degrees. Accordingly, a detection direction of a parallax amount (positional deviation amount) can be changed.

Returning to FIG. 2, the output line switching unit 102 will be explained. The output line switching unit 102 inputs the sensor VD signal 211 and the sensor HD signal 212. In the output line switching unit 102, shift registers are disposed for each row.

The sensor VD signal 211 is connected to an input of a shift register 213 of a first row, and an input of a shift register 214 that is a shift register of a next row is connected to an output of the shift register 213.

In this manner, for the shift register of each row, the output of the shift register of an upper row is connected to the input of the shift register of a lower row. The sensor HD signal 212 is connected to a clock terminal of the shift register, and input terminals are configured to be latched at a timing of the sensor HD 212 signal.

FIGS. 4A to 4D are diagrams showing timing examples of control signals of the First Embodiment, and FIG. 4A is a diagram showing timing of the camera VD signal 401 and the sensor VD signal 211, as described above. FIG. 4B is a diagram showing timing of the sensor VD signal 211 and the sensor HD signal 212.

The sensor VD signal 211 is a signal that defines start timing of frames of the photodiode unit 101. As described above, since the sensor VD signal 211 is video of 120 fps that is four times 30 fps, an interval 411 is 1/120 s.

Although the sensor VD signal 211 is normally Low active, here the sensor VD signal 211 is assumed to be High active for convenience of explanation. The sensor HD signal 212 is a signal that defines start timing of lines. In the present embodiment, the number of effective lines is, for example, 4000 lines, the number of lines of vertical blanking is, for example, 96 lines, and the total number of lines is 4096 lines.

Accordingly, the sensor HD signal 212 becomes active 4096 times during a period 411. An interval 413 of the sensor HD signal 212 becomes approximately 2.03 $\mu$s obtained by calculating interval 403/4096 s. Although the sensor HD signal 212 is normally Low active, here the sensor HD signal 212 is assumed to be High active for convenience of explanation.

At start of a frame of timing 414 of FIG. 4B, the sensor VD signal 211 and the sensor HD signal 212 become active. As a result, the sensor VD signal 211 is latched in the shift register 213 of FIG. 2, and an output of the shift register 213 becomes High.

Since the shift register 213 holds the output at High until a next sensor HD signal 212 arrives, an FET 205A, an FET 205B, an FET 204A, and an FET 204B, which are shown in FIG. 2, connected to the output of the shift register 213 also become ON until the next sensor HD signal 212 arrives.

Although only two pixels in a row (horizontal) direction are shown in FIG. 2, by the shift register 213 becoming High, FETs connected to all pixel outputs of the selected row become ON.

As a result, pixel outputs of a plurality of counters 203A for one row are connected to a vertical line 216A, and pixel outputs of a plurality of counters 203B for one row are connected to a vertical line 216B.

It should be noted that the vertical line 216A is connected to the output pixel switching unit 103A, and the vertical line 216B is connected to the output pixel switching unit 103B, and pixel outputs for one row are input to the output pixel switching unit 103A and the output pixel switching unit 103B.

In addition, by a row being selected, the FET 204A and the FET 204B also become ON, and a counter reset terminal of the counter 203A is connected to a vertical line 217A, and a counter reset terminal of the counter 203B is connected to a vertical line 217B.

In addition, the vertical line 217A is connected to the output pixel switching unit 103A, and the vertical line 217B is connected to the output pixel switching unit 103B. Accordingly, a state results in which all counter reset terminals of the selected row are connected to the output pixel switching unit 103A and the output pixel switching unit 103B.

Next, when the sensor HD signal 212 is input to the output line switching unit 102 at timing 415 of FIG. 4B, the sensor VD signal 211 of an input of the shift register 213 is Low (inactive). Accordingly, an output of the shift register 213 becomes Low by latching Low.

In contrast, the shift register 214 latches the output of the shift register 213 when the output of the shift register 213 was High, and the output of the shift register 214 becomes High. For this reason, FETs connected to the output of the shift register 214 become ON, and a next row becomes active.

In this manner, the selected row moves downward each time the sensor HD signal 212 is input, and when the sensor HD signal 212 for 4000th line of effective line number is input, and activation of a next sensor VD signal 211 is awaited.

Next, the output pixel switching unit 103A and the output pixel switching unit 103B will be described. It should be noted that the output pixel switching unit 103A will be described, and since the output pixel switching unit 103B has the same structure as the output pixel switching unit 103A, explanation of the output pixel switching unit 103B is omitted by replacing A with B.

The inputs of the output pixel switching unit 103A are an HD line 212A, a pixel clock line 221A, and a reset terminal 222A, and the output is a pixel output line 223A. In the output pixel switching unit 103A, shift registers for reading out pixel outputs and shift registers for resetting counters are disposed for each column.

First, a mechanism for reading out pixel outputs will be described. The HD line 212A is connected to an input of a shift register 224A of a first column. An output of the shift register 224A is connected to a shift register 225A that is a shift register of a next column.

In this manner, for shift registers of each column, an input and an output are connected from a column on the right. The pixel clock line 221A is connected to clock terminals of the shift registers, and input terminals are configured to be latched at the timing of a pixel clock 221 signal.

FIG. 4C is a diagram showing timing of the sensor HD signal 212 and the pixel clock 221. The sensor HD signal 212 is a signal that defines start timing of lines as described above, and explanation is omitted. The pixel clock 221 is a signal that becomes active for each pixel output.

In the present embodiment, if a number of effective pixels in one line is, for example, 4000 pixels and a number of pixels of horizontal blanking is, for example, 96 pixels, a total number of pixels in one line becomes 4096 pixels. Accordingly, the pixel clock 221 becomes active 4096 times during a period 413.

An interval 423 of the pixel clock 221 becomes approximately 0.50 ns obtained by calculating interval 413/4096 s. In the present embodiment, in order to simplify explanation, since readout occurs one pixel at a time, although a frequency of the pixel clock 221 is high-speed, the pixel clock 221 can also be lowered by multiplexing circuits so that four pixels or eight pixels can be output simultaneously.

At start of row readout of timing 424 of FIG. 4C, the sensor HD signal 212 and the pixel clock 221 become active. As a result, the sensor HD signal 212 is latched in the shift register 224A of FIG. 2, and the output of the shift register 224A becomes High.

Since the shift register 224A holds this output at High until a next pixel clock 221 arrives, an FET 206A connected to the output also becomes ON until the next pixel clock 221 arrives. By the FET 206A becoming ON, a pixel output of a rightmost counter 203A of a row selected by the output line switching unit 102 is output from the pixel output line 223A.

Next, when the pixel clock 221 is input to the output pixel switching unit 103A at timing 425 of FIG. 4C, the sensor HD signal 212 of an input of the shift register 224A is Low (inactive). Accordingly, an output of the shift register 224A becomes Low by latching Low.

Since an output of the shift register 224A was High, the shift register 225A latches the output of the shift register 224A, and an output of the shift register 225A becomes High. Accordingly, an FET connected to an output of the shift register 225A becomes ON, and a state results in which a next pixel is selected.

In this manner, a selected pixel moves to a left column each time the pixel clock 221 is input, and when the pixel clock 221 for 4000 effective pixels of one line is input, a selection of pixel is stopped. Accordingly, activation of a next sensor HD signal 212 is awaited.

Next, a mechanism for resetting counters for each pixel will be described. Operation is substantially the same as the mechanism for reading out pixel outputs. A difference is that ten extra shift registers (228A) are arranged before a first column. As a result, a reset terminal of a pixel counter that was read out can be accessed ten cycles of the pixel clock 221 after reading out a pixel output.

A reason that this timelag is necessary is that the in-sensor signal processing unit 111 of FIG. 1 receives pixel outputs, determines whether or not reset is necessary for the counter 203A and the counter 203B based on the pixel outputs, and time is required until a counter reset signal is output.

Next, detailed explanation will be provided. As described above, ten shift registers (228A) are connected to the HD line 212A. A shift register 226A of a first column is connected ahead of the ten shift registers. An output of the shift register 226A is connected to a shift register 227A that is a shift register of a next column.

In this manner, for shift registers of each column, inputs and outputs are connected from a right column. The pixel clock line 221A is connected to clock terminals of the shift registers, and input terminals are latched at timing of the pixel clock 221 signal.

FIG. 4D is a diagram explaining timing of counter reset. The diagram shows an input of the shift register 226A, and a pulse 432 shows a state in which the sensor HD signal 212 is output with a delay of ten clocks.

At timing 433, the sensor HD signal 212 (=pulse 432) and the pixel clock 221 become active. As a result, the sensor HD signal 212 is latched in the shift register 226A of FIG. 2, and the output of the shift register 226A becomes High.

Since the shift register 226A holds the output at High until a next pixel clock 221 arrives, an FET 209A connected to the output also becomes ON until the next pixel clock 221 arrives.

By the FET 209A becoming ON, a counter reset terminal of the counter 203A of a row that is active by the output line switching unit 102 is connected to a reset terminal 222A via the vertical line 217A. Accordingly, by making the reset terminal 222A active at this timing, the counter 203A stops counting, and holds a count value even when a pulse is input.

Next, when the pixel clock 221 is input to the output pixel switching unit 103A at timing 434 of FIG. 4D, the input of the shift register 226A is Low (inactive). Accordingly, the output of the shift register 226A becomes Low by latching Low.

Since the output of the shift register 226A was High, the shift register 227A latches the output of the shift register 226A, and the output of the shift register 227A becomes High. Accordingly, an FET connected to the output of the shift register 227A becomes ON, and a state results in which a next pixel is selected.

In this manner, a selected pixel moves to a left column each time the pixel clock 221 is input. Then, when the pixel clock 221 for 4010 pixels obtained by adding 4000 effective pixels of one line and ten units worth of the shift registers 228A is input, a selection of pixels is stopped, and activation of a next sensor HD signal 212 is awaited.

By adopting such a configuration, counters for each single pixel can be reset from outside the pixel unit 105, that is, initialization of individual pixels becomes possible.

Returning to FIG. 1, the in-sensor signal processing unit 111 will be described. The in-sensor signal processing unit 111 has a sensor Sync generation unit 118 that generates the sensor VD signal 211 and the sensor HD signal 212, a counter reset 119A and a counter reset 119B that generate counter reset signals. In addition, the in-sensor signal processing unit 111 has a contrast calculation unit 114A and a contrast calculation unit 114B that calculate contrast values, and a saturation detection unit 112A and a saturation detection unit 112B that detect saturation.

As described above, the sensor Sync generation unit 118 generates the sensor VD signal 211 and the sensor HD signal 212 from the camera VD signal 401. Then, the sensor Sync generation unit 118 distributes the sensor VD signal 211 to the output line switching unit 102, and distributes the sensor HD signal 212 and the pixel clock 221 to the output pixel switching unit 103A and to the output pixel switching unit 103B.

In contrast, a pixel output from the output pixel switching unit 103A is transferred to the saturation detection unit 112A and the contrast calculation unit 114A, and a pixel output from the output pixel switching unit 103B is transferred to the saturation detection unit 112B and to the contrast calculation unit 114B.

In the saturation detection unit 112A and the saturation detection unit 112B, determination is made whether input pixel outputs exceed a saturation determination threshold value, and in a case in which determination is made that input pixel outputs exceed the saturation determination threshold value, saturation determinations are transmitted to the counter reset 119A and to the counter reset 119B.

The contrast calculation unit 114A and the contrast calculation unit 114B are blocks that obtain contrast from received pixel outputs. Line buffers for 16 lines are built into the contrast calculation unit 114A and the contrast calculation unit 114B, and input pixel outputs are stored in the line buffers.

It should be noted that the contrast calculation unit 114A and the contrast calculation unit 114B execute a contrast calculation step of calculating contrast information for each predetermined region of at least one image among the two images having parallax. It should be noted that the contrast information may be contrast values themselves or may be contrast values subjected to some correction processing and the like.

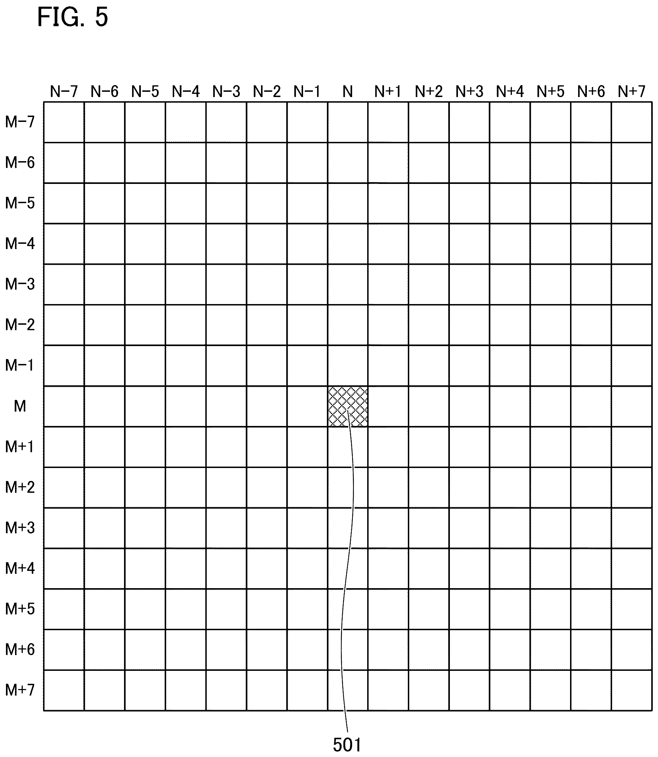

FIG. 5 is a diagram explaining an example of pixels employed when calculating contrast values of the First Embodiment. When a pixel signal at a predetermined position is expressed as P(m, n) of a pixel of interest, variance is obtained from 15×15 pixel signals centered on the pixel of interest 501.

That is, as shown in Equation 1 below, an average value Pave of 15×15 pixel signals is obtained, and a sum of squares obtained by subtracting Pave from each pixel signal is set as a contrast value CT of the pixel of interest 501 in the present embodiment.

$$CT = \sum_{m=-7}^{7} \sum_{n=-7}^{7} \left( \mathrm{P}\,(m,n) - \mathrm{P}\,ave \right)^{2}$$

... (Equation 1)

In this manner, in the present embodiment, the contrast calculation unit calculates the contrast information of the pixel based on signals of a plurality of pixels surrounding the pixel.

It should be noted that the contrast value CT obtained as described above includes various noises of the sensor. For example, light shot noise, dark random noise, sensor-specific noise, and the like. Accordingly, a division value obtained by dividing by the noise variance value that was measured and stored in advance according to luminance is transmitted to the determination circuit 116A and the determination circuit 116B as the contrast determination value. It should be noted that the above-described contrast determination value functions as contrast information.

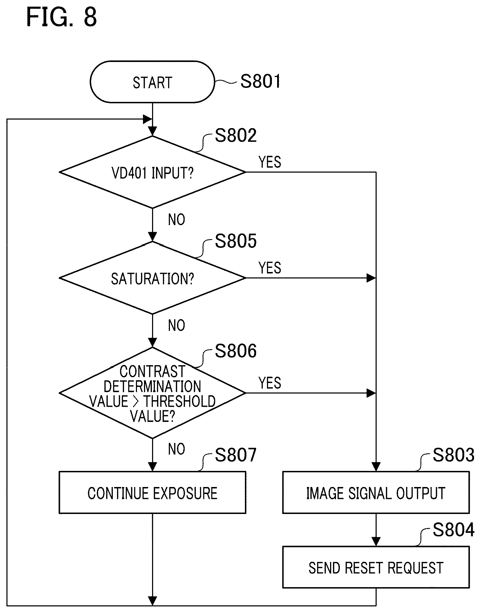

In the determination circuit 116A and the determination circuit 116B, determination is made whether to output pixel outputs or to request counter reset according to the flowchart shown in FIG. 8.

FIG. 8 is a flowchart showing an example of a processing flow of the determination circuit 116A and an example of a processing flow of the determination circuit 116B of the First Embodiment. It should be noted that operations of each step of the flowchart of FIG. 8 are performed sequentially by causing a CPU and the like serving as a computer in the image capturing system to execute a computer program stored in memory.

The flowchart of FIG. 8 starts from step S801, and in step S802, a determination is made whether the camera VD signal 401 is being input.

In a case in which determination is made in step S802 that the camera VD signal 401 is being input, processing proceeds to step S803. In step S803, image signal output is performed, and processing proceeds to step S804. In step S804, a reset request is transmitted to the counter reset 119A.

In contrast, in a case in which determination is made in step S802 that the camera VD signal 401 is not being input, processing proceeds to step S805. In step S805, a determination is made whether saturation determination sent from the saturation detection unit 112A and the saturation detection unit 112B is true, that is, whether or not saturation is occurring. For this purpose, a determination is made whether or not pixel signals of a predetermined region are at least a predetermined value.

In a case in which determination of Yes is made in step S805, processing proceeds to step S803, and an image signal is output. That is, in a case in which determination is made that pixel signals of the predetermined region are at least the predetermined value, pixel signals of the above-described region are output from the image capturing element. Then, after the pixel signals are output from the image capturing element, the pixel signals are initialized by sending the reset request to the counter reset 119A in step S804.

In a case in which determination of No is made in step S805, processing proceeds to step S806. It should be noted that in step S806, a determination is made whether the contrast determination value sent from the contrast calculation unit 114A and the contrast calculation unit 114B is at least a threshold value.

It should be noted that a relationship between degree of coincidence of correlation calculation used when generating the distance measurement image at a later stage and the contrast determination value is measured in advance, and in the present embodiment, a point at which an error of the distance measurement value becomes, for example, 10% is set as the threshold value of the contrast determination value.

In a case in which determination of Yes is made in step S806, processing proceeds to step S803. In a case in which determination of No is made in step S806, processing proceeds to step S807. In step S807, since contrast is also low, saturation is also not occurring, and the present timing is also not for a camera output frame, a determination is made that improvement will occur if exposure is continued, and exposure is continued while the pixel output is set to 0. Alternatively, pixel output is not performed.

That is, in the present embodiment, in a case in which contrast information of pixel signals of the region is less than a predetermined threshold value and the pixel signals of the region are not saturated, 0 is output as the pixel signal from the image capturing element, or the pixel signal is not output.

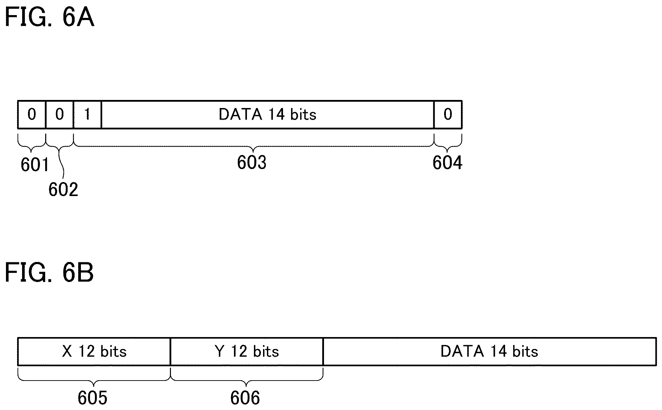

FIG. 6A and FIG. 6B are diagrams explaining output format examples of distance measurement images of the First Embodiment, and FIG. 6A shows an example of the pixel output in step S807. When determination is made in step S806 that the value is below the threshold, in step S807, 1 bit of 0 is output as pixel output 603. It should be noted that 601, 602, and 604 are other bits.

In contrast, in step S803, although an image signal is output because determination is made in step S806 that the contrast determination value is at least the threshold value, the pixel output 603 at this time transmits 14 bits as DATA after transmitting a 1-bit valid bit. In this manner, in the example shown in FIG. 6A, only 1 bit is transmitted for pixels having a contrast determination value equal to or less than the threshold value, and data transmission capacity is reduced.

That is, in the present embodiment, pixel signals of regions determined to have contrast information at least a predetermined threshold value are output from the image capturing element. In addition, in a case in which determination is made that the contrast information is at least the predetermined threshold value, after the pixel signals are output from the image capturing element, the pixel signals are initialized.

In contrast, FIG. 6B shows an example of another output format of the distance measurement image in a case in which pixel output of pixels having low contrast is not performed in step S807.

In the example of FIG. 6B, in a case in which the contrast was low, pixel output is not output, and in a case in which the contrast was high, data is output in step S803, and pixel output data is output by being attached following X-coordinate data 605 and Y-coordinate data 606. It should be noted that in the following explanation, it is assumed that the format shown in FIG. 6A is used.

In addition, in step S804, the reset request is sent as described above. At this time, the counter reset 119A and the counter reset 119B generate a counter reset signal based on a reset request of the determination circuit 116A and a reset request of the determination circuit 116B and send the counter reset signal to the output pixel switching unit 103A and the output pixel switching unit 103B.

Thereby, pixel output is reset. As described above, the counter reset signal is output ten pixel clocks 221 after the pixel output enters the in-sensor signal processing unit 111.

It should be noted that in step S807, the exposure amount is increased by continuing exposure. In this manner, step S807 functions as an exposure adjustment step (exposure adjustment unit) that performs exposure adjustment of the above-described region in a case in which determination is made in step S806 that contrast information of pixel signals of the predetermined region is less than the predetermined threshold value.

It should be noted that although the exposure adjustment unit lengthens exposure time by continuing exposure of the image capturing element here, pixel signals of the above-described region may be added in a temporal direction.

It should be noted that when processing of step S807 or step S804 is completed, processing returns to step S802, and processing of step S802 to step S807 is repeated.

Returning to FIG. 1, the image generation unit 130 will be described. The image generation unit 130 receives the image signal A and the image signal B output from the image capturing element 100 as inputs. The image signal A and the image signal B are transmitted from the image capturing element 100 by a high-speed digital interface (LVDS and the like).

First, the image signal A is received by the image signal reception unit 131A, and the image signal B is received by the image signal reception unit 131B. The image signal A received by the image signal reception unit 131A is sent to the image signal restoration circuit for development 132A, and the image signal B received by the image signal reception unit 131B is sent to the image signal restoration circuit for development 132B.

As described above, in a case in which the contrast determination value obtained from the contrast value is equal to or less than the threshold value, output is only 1 bit for the image signal A and the image signal B, and data of the pixel output is not output. Accordingly, restoration of the image signal for development is performed in the image signal restoration circuit for development 132A and the image signal restoration circuit for development 132B. Similarly, restoration of the image signal for distance measurement is performed in the image signal restoration circuit for distance measurement 133A and the image signal restoration circuit for distance measurement 133B.

Next, a restoration method of the image signal for development and a restoration method of the image signal for distance measurement will be described. In processing for restoration, since the developed image is output only one image per one frame, image signals sent during this period are progressively added to a frame buffer, and the summed value is output as the restored image signal at timing of the camera VD signal 401. It should be noted that the developed image is an image (video) for display on a display apparatus.

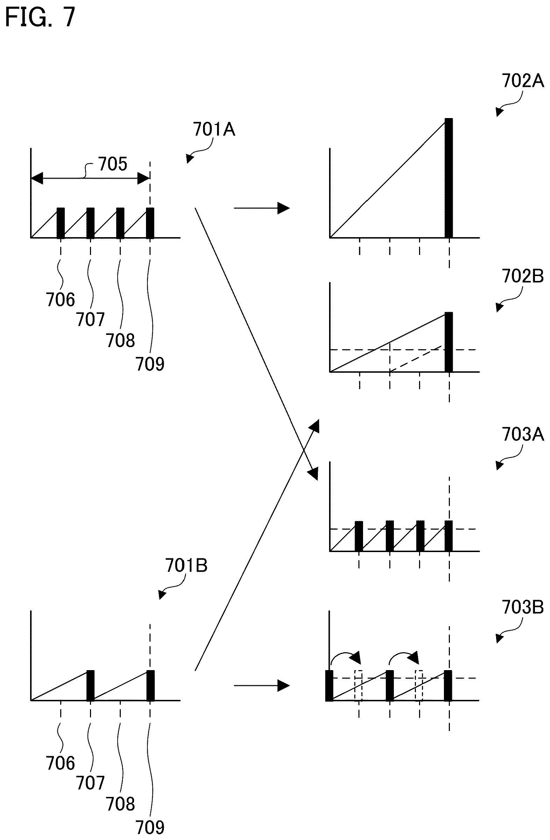

FIG. 7 is a diagram showing an example of a restoration method of the image signal for development and the image signal for distance measurement of the First Embodiment. A graph 701A shows an example of an input signal at the image signal reception unit 131A, and a graph 701B shows an example of an input signal at the image signal reception unit 131B.

A graph 702A shows an example of an input signal at the image signal restoration circuit for development 132A, and a graph 702B shows an example of an input signal at the image signal restoration circuit for development 132B. A graph 703A shows an example of an input signal at the image signal restoration circuit for distance measurement 133A, and a graph 703B shows an example of an input signal at the image signal restoration circuit for distance measurement 133B.

Each graph focuses on only one specific pixel, and the horizontal axis represents time and the vertical axis represents a level of pixel output so that temporal changes of the level of pixel output can be understood. Pixel output is output at timing of black vertical bars in each graph, and a length of the bars corresponds to the level of pixel output.

The specific pixel is referred to as an S pixel here. A period 705 shown in the graph 701A represents a period of one frame that is a period of the camera VD signal 401. As described above, in the present embodiment, since the camera VD signal 401 is set to 30 fps, the period 705 is approximately 1/30 s.

Timing 706, timing 707, timing 708, and timing 709 are output timings of the image signal of the sensor VD signal 211, and a frame rate is 120 fps.

In the graph 701A showing the input signal of the image signal reception unit 131A, since contrast of the pixel on the A side of the S pixel was high, pixel output is being sent for each sensor VD signal 211.

Accordingly, in the graph 702A of the image signal restoration circuit for development 132A, pixel output data is added to a frame buffer 134 for each sensor VD signal 211, and pixel output summed up to that point is generated at the timing of the camera VD signal 401.

In contrast, as the graph 701B shows, since contrast of the pixel on the B side of the S pixel was not very high, pixel output is output only at, for example, timing 707 and timing 709 of the sensor VD signal 211.

In this case, as the graph 702B shows, pixel output is generated by summing these two pixel outputs by using the frame buffer 134. By performing this processing on all pixels, the image signal A and the image signal B are restored.

The distance measurement image is output from the pixel unit 105 at the timing of each sensor VD signal 211. Accordingly, in a case in which contrast is high and pixel output is sent from the determination circuit, the pixel output is used, and in a case in which contrast is low and pixel output does not come from the determination circuit, pixel output stored in a frame buffer 135 is used.

In the graph 703A of the image signal restoration circuit for distance measurement 133A, since pixel output is being sent from the sensor at the timing of the sensor VD signal 211, the image signal for distance measurement is generated at the S pixel without referring to a value of the frame buffer 135.

However, the image signal for distance measurement is stored in the frame buffer 135. In contrast, in the graph 703B of the image signal restoration circuit for distance measurement 133B, since pixel output is not being sent at timing 706 and timing 708, pixel output stored in the frame buffer 135 is used.

At timing 707 and timing 709, pixel output sent from the sensor is stored in the frame buffer 135, and simultaneously, the output is used to generate the image signal for distance measurement at the S pixel.

In the developed-image generation circuit 137, the two image signals, image signal A and image signal B, restored by the image signal restoration circuit for development 132A and the image signal restoration circuit for development 132B are combined, Debayer processing and color matrix processing are applied, and a developed image for display is generated. Since this portion is similar to the conventional technology, a detailed explanation is omitted.

In the distance measurement image generation circuit 136, the distance measurement image is generated based on a parallax amount of the two image signals, A and B, having different viewpoints restored by the image signal restoration circuit for distance measurement 133A and the image signal restoration circuit for distance measurement 133B.

That is, the distance measurement image generation circuit 136 calculates a parallax amount of the image signal A and the image signal B. Specifically, the distance measurement image generation circuit 136 sets a point of attention in the image signal A, and sets a matching range centered on the point of attention.

The matching range is, for example, a rectangle having a side of predetermined pixels centered on the point of attention. The distance measurement image generation circuit 136 next sets a reference point in the image signal B, and sets a reference range centered on the reference point. The reference range has the same size and shape as the matching range.

The distance measurement image generation circuit 136 calculates a degree of correlation between the image signal A included in the matching range and the image signal B included in the reference range while sequentially moving the reference point, and sets a reference point having the highest correlation as a corresponding point corresponding to the point of attention. A relative positional deviation amount between the point of attention and the corresponding point corresponds to a parallax amount at the point of attention.

The distance measurement image generation circuit 136 can calculate parallax amounts at a plurality of pixel positions by calculating the parallax amount while sequentially moving the point of attention. As a method of calculating the degree of correlation, known methods can be used.

For example, a method called NCC (Normalized Cross-Correlation) that evaluates normalized cross-correlation between image signals can be used. Alternatively, SSD (Sum of Squared Difference) that evaluates sum of squares of differences between image signals or SAD (Sum of Absolute Difference) that evaluates sum of absolute values of differences may be used.

Subsequently, the distance measurement image generation circuit 136 converts the parallax amount to a defocus amount that is a distance from the image capturing element 100 to a focus of the image forming optical system 304 by using a predetermined conversion coefficient. When a predetermined conversion coefficient is K, a defocus amount is $\Delta L$, and a parallax amount is d, the parallax amount d can be converted to the defocus amount $\Delta L$ by Equation 2 below.

$$\Delta L = K \times d \dots \quad \text{(Equation 2)}$$

By performing distance information generation processing at a plurality of pixel positions, a distance image including defocus amounts of the plurality of pixel positions as distance information can be generated.

Subsequently, conversion from the defocus amount to a subject distance is performed. Conversion from the defocus amount to the subject distance can be performed by using an image formation relationship of the image forming optical system 304. For example, conversion can be performed by using a focal length of the image forming optical system 304 and a principal point position of the image forming optical system 304. By the processing described above, the distance image including the subject distance as distance information can be generated.

It should be noted that in the present embodiment, a configuration is adopted in which a frame buffer for adding pixel signals in a temporal direction is provided outside the image capturing element 100. However, a frame buffer may be provided in a stacked portion of a stacked-type image capturing element 100, and a configuration in which an image is added in the time direction inside the image capturing element 100 and then output may be adopted. In this case, a configuration in which the developed image and the distance measurement image are output independently from the image capturing element 100 may be adopted.

In the present embodiment, by adopting the configuration described above, exposure adjustment for each predetermined region becomes possible based on the contrast information, and locations having high contrast are output as distance information earlier, and an update cycle can be shortened. In addition, at locations at which contrast is insufficient, exposure can be continued, and unevenness of contrast occurring due to subjects on the image can be reduced.

In this manner, the frame buffer 135 and the like of the present embodiment function as an exposure adjustment unit that executes an exposure adjustment step of performing exposure adjustment for each region based on contrast information. In addition, the distance measurement image generation circuit 136 functions as a distance calculation unit, and executes a distance calculation step of calculating distance to a subject for each region based on parallax amount of images of regions of two images that were adjusted in the exposure adjustment step.

<Second Embodiment>

In the explanation of the First Embodiment, an example using an APD capable of counting photons was introduced.

As described above, a sensor capable of counting photons has a characteristic wherein S/N does not deteriorate no matter how many times readout takes place because readout noise does not occur, and in the First Embodiment, a configuration example utilizing the characteristic was explained. In contrast, in the Second Embodiment, an example using a CMOS sensor and the like is shown.

FIG. 9 is a functional block diagram showing a configuration example of an image capturing system of the Second Embodiment. The image capturing system of FIG. 9 is, for example, a camera, and an image capturing unit 901 has an image forming optical system 920 and an image capturing element 921.

The image forming optical system 920 is an image capturing lens and the like disposed in front of the image capturing unit 901, and forms an image of a subject on the image capturing element 921. The image forming optical system 920 is configured by a plurality of lens groups (not shown), and has an exit pupil (not shown) at a position separated by a predetermined distance from the image capturing element 921.

It should be noted that in the present embodiment, in the image forming optical system 920, an axis parallel to an optical axis of the image forming optical system 920 is defined as an n-axis, and two axes orthogonal to the optical axis and orthogonal to each other are defined as an l-axis and an m-axis.

The image capturing element 921 is configured by a CMOS (Complementary Metal Oxide Semiconductor) or a CCD (Charge Coupled Device), and is an image capturing element having a distance measurement function by an image plane phase difference distance measurement method.

A subject image that has been formed on the image capturing element 921 via the image forming optical system 920 is photoelectrically converted by the image capturing element 921, and an image signal based on the subject image is generated. An image signal for recognition processing and a developed image for display on a display apparatus (not shown) are generated by applying image processing, by an image processing unit 902, to the acquired image signal.

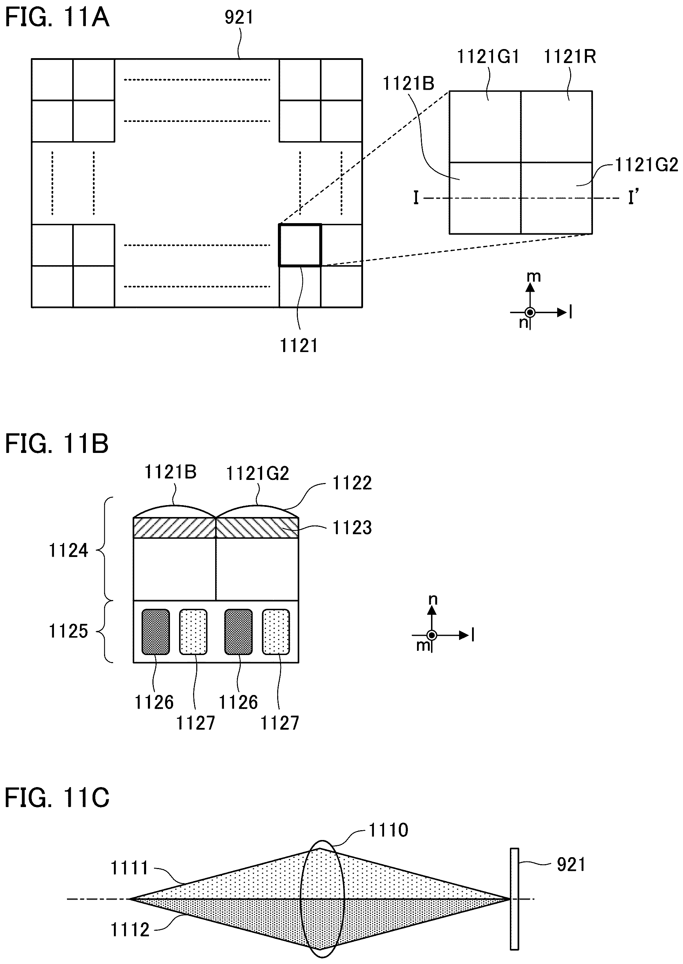

FIGS. 11A to 11C are diagrams explaining an image plane phase difference distance measurement method, and FIG. 11A is an lm cross-sectional diagram of the image capturing element 921. In the image capturing element 921 of FIG. 11A, a plurality of pixel blocks 1121 of 2 rows × 2 columns are arranged. In the pixel block 1121, a green pixel 1121G1 and a green pixel 1121G2 are disposed diagonally, and a red pixel 1121R and a blue pixel 1121B are disposed in the other two pixels.

FIG. 11B is a diagram schematically showing an I-I' cross section of the pixel block 1121, and FIG. 11C is a diagram showing a first light flux 1111 that is received by a first photoelectric conversion unit 1126 and a second light flux 1112 that is received by a second photoelectric conversion unit 1127.

In each pixel, two photoelectric conversion units (a first photoelectric conversion unit 1126 and a second photoelectric conversion unit 1127) for photoelectrically converting received light are disposed in a light receiving layer 1125. A microlens 1122 is disposed so that an exit pupil and the light receiving layer 1125 become in an optically conjugate relationship.

As a result, the first photoelectric conversion unit 1126 mainly receives the first light flux 1111, and the second photoelectric conversion unit 1127 mainly receives the second light flux 1112.

The first photoelectric conversion unit 1126 generates an electrical signal by photoelectrically converting the received light flux. Similarly, the second photoelectric conversion unit 1127 generates an electrical signal by photoelectrically converting the received light flux. An image signal A is generated by a set of electrical signals generated by the first photoelectric conversion unit 1126 of each pixel of the image capturing element 921.

Similarly, an image signal B is generated by a set of electrical signals generated by the second photoelectric conversion unit 1127 of each pixel of the image capturing element 921. An intensity distribution of an image that the first light flux 1111 forms on the image capturing element 921 can be obtained from the image signal A, and an intensity distribution of an image that the second light flux 1112 forms on the image capturing element 921 can be obtained from the image signal B.

In addition, because the pixel block 1121 comprises color filters corresponding to each wavelength range of blue, green, and red, image signal A and image signal B include three types of color information. That is, in the image capturing element 921 of the present embodiment, each pixel has both an image capturing function and a distance measurement function. Accordingly, the image capturing unit 901 also comprises the function as an image capturing unit.

It should be noted that the image capturing unit 901 may also be a configuration that combines a stereo camera or a camera for image capturing and a LiDAR for acquiring distance information.

FIG. 12 is a diagram explaining image plane phase difference distance measurement of a 2×2 configuration. In the Second Embodiment as well, although two photoelectric conversion units, a first photoelectric conversion unit 1126 and a second photoelectric conversion unit 1127, were provided in a blue pixel 1121B as in FIG. 11B, four photoelectric conversion units may be disposed as shown in FIG. 12.

The four photoelectric conversion units are defined as a photoelectric conversion unit 1201, a photoelectric conversion unit 1202, a photoelectric conversion unit 1203, and a photoelectric conversion unit 1204. If output obtained by adding outputs of the photoelectric conversion unit 1201 and the photoelectric conversion unit 1203 is defined as left output, and output obtained by adding outputs of the photoelectric conversion unit 1202 and the photoelectric conversion unit 1204 is defined as right output, the same results as in the case of the above-described two photoelectric conversion units can be obtained.

In contrast, if output obtained by adding outputs of the photoelectric conversion unit 1201 and the photoelectric conversion unit 1202 is defined as upper output, and output obtained by adding outputs of the photoelectric conversion unit 1203 and the photoelectric conversion unit 1204 is defined as lower output, a configuration obtained by rotating the configuration of the above-described two photoelectric conversion units by 90 degrees results. Accordingly, a detection direction of parallax can be changed.

The image processing unit 902 has a camera Sync generation unit 910, and the camera Sync generation unit 910 generates a camera VD signal 1001 and a sensor VD signal 1003.

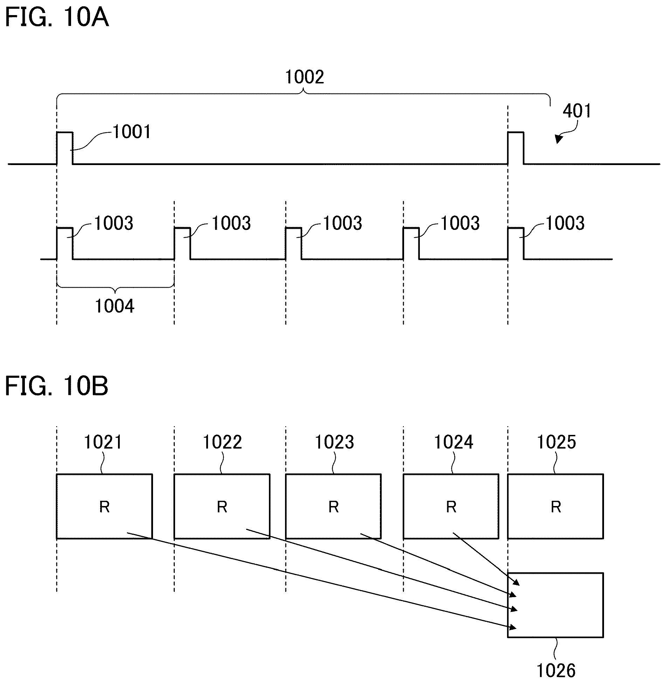

FIG. 10A and FIG. 10B are diagrams showing an example of a method of generating image signals for development of the Second Embodiment, and FIG. 10A is a diagram showing a timing example of the camera VD signal 1001 and the sensor VD signal 1003.

In the present embodiment, because the camera VD signal 1001 is output at a cycle of 30 fps, an interval 1002 is 1/30 s, and the image capturing system can output video every 1/30 s. It should be noted that the VD signal is made High active.

The sensor VD signal 1003 is set to a frequency four times that of the camera VD signal 1001, and an interval 1004 is 1/120 s. Accordingly, four images are output from the sensor during a period in which one image is output as video output of the camera main body. The camera VD signal 1001 and the sensor VD signal 1003 generated by the camera Sync generation unit 910 are transmitted to the image capturing unit 901.

The image signal A and the image signal B output from the image capturing unit 901 are transmitted to the image processing unit 902 via a high-speed digital interface. First, the image signal A is received by an image signal reception unit 903A, and the image signal B is received by an image signal reception unit 903B.

An image signal generation circuit for development 904A and an image signal generation circuit for development 904B generate an image signal A for development and an image signal B for development by using a frame buffer 906. In contrast, the image signal A and the image signal B are also input to an image signal generation circuit for distance measurement 905A and an image signal generation circuit for distance measurement 905B.

The image signal generation circuit for distance measurement 905A and the image signal generation circuit for distance measurement 905B generate an image signal A for distance measurement and an image signal B for distance measurement by using a frame buffer 907. A distance measurement image is generated by transmitting the generated image signals for distance measurement to a distance measurement image generation circuit 909.

FIG. 10B is a diagram showing a state of the image signal A input to the image signal generation circuit for development 904A, and images 1021 to 1025 show the image signal A transmitted at timing of the sensor VD signal 1003.

The image signal generation circuit for development 904A progressively adds the images 1021 to 1024 by using the frame buffer 906, and outputs the image signal A for development at timing of the image 1026.

Since the image signal generation circuit for development 904B is also similar, explanation is omitted. A developed image is generated by transmitting the image signal A for development and the image signal B for development generated in this manner to a developed-image generation circuit 908. Since this method has been described in the First Embodiment, explanation here is omitted.

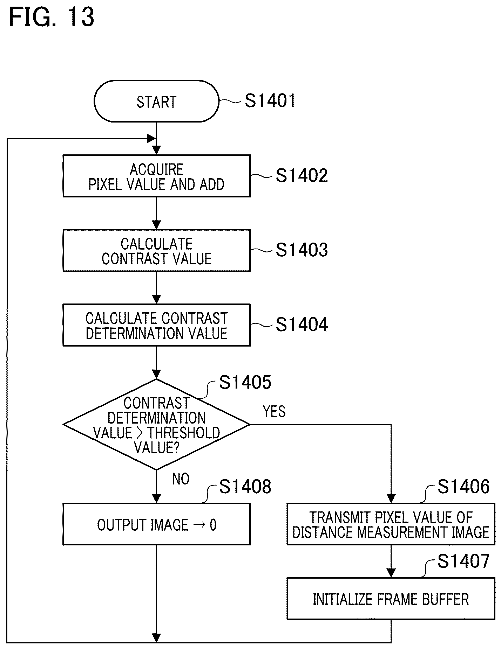

FIG. 13 is a flowchart showing an example of a restoration processing flow of image signals for distance measurement of the Second Embodiment, and shows a processing flow of the image signal generation circuit for distance measurement 905A and a processing flow of the image signal generation circuit for distance measurement 905B.

It should be noted that operations of each step of the flowchart of FIG. 13 are performed sequentially by causing a CPU and the like serving as a computer in the image capturing system to execute a computer program stored in a memory.

It should be noted that although explanation is provided only with respect to the image signal generation circuit for distance measurement 905A, since the image signal generation circuit for distance measurement 905B also has the same operation, explanation with respect to operation of the image signal generation circuit for distance measurement 905B is omitted.

The flowchart of FIG. 13 starts from step S1401, and when a pixel signal is input from a pixel at coordinates (m, n), processing proceeds to step S1402. In step S1402, a pixel value P(m, n) at coordinates (m, n) of the frame buffer 907 is acquired, added, and written back.

The processing of adding corresponds to an exposure adjustment function. That is, the processing of adding has a function equivalent to lengthening exposure time. A pixel value written back to the frame buffer is set to M(m, n), and processing proceeds to step S1403.

In step S1403, a contrast value is calculated when M(m, n) is set as a pixel of interest. A method of obtaining a contrast value may be the same as in the First Embodiment, and detailed explanation is omitted. However, although in the First Embodiment, 15×15 values were held by a line buffer, in the present embodiment, signals of 15×15 pixels centered on the pixel of interest M(m, n) are read out from the frame buffer, and a contrast value is obtained.

In step S1404, a contrast determination value is calculated by performing division by various types of noise acquired in advance, from a luminance value of the pixel of interest M(m, n), and processing proceeds to step S1405.

In step S1405, a determination is made as to whether or not the contrast determination value obtained in step S1404 is at least a threshold value, and if the contrast determination value is at least the threshold value, processing proceeds to step S1406. In step S1406, the pixel of interest M(m, n) is transmitted as a pixel value of a distance measurement image to the distance measurement image generation circuit 909, and processing proceeds to step S1407.

In step S1407, a value at coordinates (m, n) of the frame buffer is initialized to 0, and processing returns to step S1402. In contrast, in a case in which the determination is No in step S1405, processing proceeds to step S1408, and in step S1408, an output pixel is set to 0 and transmitted to the distance measurement image generation circuit 909, and processing returns to step S1402.

In the present embodiment, because exposure adjustment is not at the image capturing element, depending on a manner of providing bit width of the image processing unit 902, contrast deterioration due to saturation is less likely to occur. Accordingly, in the present embodiment, for example, initialization may be performed by providing a certain threshold value.

By adopting a configuration as described above, exposure adjustment for each region according to contrast becomes possible, and portions with higher contrast are output as distance information earlier, and an update cycle can be made faster. As a result, in portions where contrast is insufficient, continuation of exposure becomes possible, and differences and unevenness of contrast that occur depending on a subject in an image can be reduced.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the image capturing apparatus and the like through a network or various storage media. Then, a computer (or a CPU, an MPU, or the like) of the image capturing apparatus and the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2025-017150, filed on February 4, 2025, which is hereby incorporated by reference herein in its entirety.

**Claims**

1. An image capturing apparatus comprising:

   an image capturing element configured to acquire two images having parallax;
   contrast calculation unit configured to calculate contrast information for each predetermined region of at least one image among the two images;
   exposure adjustment unit configured to perform exposure adjustment for each of the regions based on the contrast information; and
   distance calculation unit configured to calculate a distance to a subject for each of the regions based on an amount of deviation of images of the region in the two images adjusted in the exposure adjustment.

2. The image capturing apparatus according to claim 1, further comprising;
   a control unit configured to output from the image capturing element the pixel signals of the regions for which the contrast information is determined to be at least a predetermined threshold value.

3. The image capturing apparatus according to claim 2, wherein the control unit is configured to initialize the pixel signals after the pixel signals are output from the image capturing element in a case in which the contrast information is determined to be at least the predetermined threshold value.

4. The image capturing apparatus according to claim 2 or 3 , wherein, the contrast calculating unit is configured to calculate the contrast information of a pixel based on signals of a plurality of surrounding pixels centered on the pixel.

5. The image capturing apparatus according to any one of claims 1 to 4, wherein, in a case in which pixel signals of the region are determined to be at least a predetermined value, the pixel signals of the region from the image capturing element is output.

6. The image capturing apparatus according to claim 5, wherein, in a case in which the pixel signals of the region are determined to be at least the predetermined value, the pixel signals are initialized after the pixel signals of the region are output from the image capturing element.

7. The image capturing apparatus according to any one of claims 1 to 6, wherein the exposure adjustment unit is configured to, in a case in which the contrast information of pixel signals of the region is determined to be less than a predetermined threshold value, perform the exposure adjustment of the region in the exposure adjustment.

8. The image capturing apparatus according to any one of claims 2 to 7, wherein, in a case in which the contrast information of pixel signals of the region is less than the predetermined threshold value and the pixel signals of the region are not saturated, 0 is output as the pixel signals or none of the pixel signals is output.

9. The image capturing apparatus according to any one of claims 1 to 8, wherein the exposure adjustment unit is configured to adjust an exposure time of the image capturing element based on the contrast information.

10. The image capturing apparatus according to any one of claims 1 to 9, wherein the exposure adjustment unit is configured to add pixel signals of the region in a temporal direction.

11. An image capturing method comprising:

   acquiring two images having parallax;
   calculating contrast information for each predetermined region of at least one image among the two images;
   performing exposure adjustment for each of the regions based on the contrast information; and
   calculating a distance to a subject for each of the regions based on an amount of deviation of images of the region in the two images adjusted in the exposure adjustment.

12. A computer program comprising instructions which, when the program is executed by a computer, cause the computer to carry out the method of claim 11.

13. A computer-readable storage medium configured to store the computer program of claim 12.

# FIG. 1

EP 4 787 311 A1

FIG. 2

FIG. 3A

FIG. 3B

FIG. 3C

FIG. 4A

402

401

211 211 211 211

403

FIG. 4B

411

211 211

212 212 212 212 212 212 212

413

414 415

FIG. 4C

413

212 212

221 221 221 221 221 221 221

423

424 425

FIG. 4D

432

424 425 431 433 434

FIG. 5

|       | N−7 | N−6 | N−5 | N−4 | N−3 | N−2 | N−1 | N | N+1 | N+2 | N+3 | N+4 | N+5 | N+6 | N+7 |
|-------|-----|-----|-----|-----|-----|-----|-----|---|-----|-----|-----|-----|-----|-----|-----|
| M−7   |     |     |     |     |     |     |     |   |     |     |     |     |     |     |     |
| M−6   |     |     |     |     |     |     |     |   |     |     |     |     |     |     |     |
| M−5   |     |     |     |     |     |     |     |   |     |     |     |     |     |     |     |
| M−4   |     |     |     |     |     |     |     |   |     |     |     |     |     |     |     |
| M−3   |     |     |     |     |     |     |     |   |     |     |     |     |     |     |     |
| M−2   |     |     |     |     |     |     |     |   |     |     |     |     |     |     |     |
| M−1   |     |     |     |     |     |     |     |   |     |     |     |     |     |     |     |
| M     |     |     |     |     |     |     |     |▩ |     |     |     |     |     |     |     |
| M+1   |     |     |     |     |     |     |     |   |     |     |     |     |     |     |     |
| M+2   |     |     |     |     |     |     |     |   |     |     |     |     |     |     |     |
| M+3   |     |     |     |     |     |     |     |   |     |     |     |     |     |     |     |
| M+4   |     |     |     |     |     |     |     |   |     |     |     |     |     |     |     |
| M+5   |     |     |     |     |     |     |     |   |     |     |     |     |     |     |     |
| M+6   |     |     |     |     |     |     |     |   |     |     |     |     |     |     |     |
| M+7   |     |     |     |     |     |     |     |   |     |     |     |     |     |     |     |

501

## FIG. 6A

| 0 | 0 | 1 | DATA 14 bits | 0 |
|---|---|---|---|---|

601  602  603  604

## FIG. 6B

| X 12 bits | Y 12 bits | DATA 14 bits |
|---|---|---|

605  606

FIG. 7

FIG. 8

```
                    ┌─────────────┐
                    │    START    │──── S801
                    └──────┬──────┘
                           │
         ┌─────────────────┤
         │                 ▼
         │            ╱─────────╲ ──── S802          YES
         │           ╱  VD401    ╲──────────────────────────┐
         │           ╲  INPUT?   ╱                          │
         │            ╲─────────╱                           │
         │                 │ NO                             │
         │                 ▼                                │
         │            ╱─────────╲ ──── S805                 │
         │           ╱           ╲      YES                 │
         │           ╲ SATURATION?╱────────────────────┐   │
         │            ╲─────────╱                       │   │
         │                 │ NO                         │   │
         │                 ▼                            │   │
         │            ╱─────────╲ ──── S806             │   │
         │           ╱ CONTRAST  ╲                      │   │
         │          ╱ DETERMINATION╲   YES              │   │
         │          ╲ VALUE > THRESHOLD ────────────────┤   │
         │          ╲    VALUE?   ╱                      │   │
         │            ╲─────────╱                        │   │
         │                 │ NO  ── S807                 ▼   ▼
         │                 ▼                       ┌──────────────┐── S803
         │          ┌──────────────┐              │ IMAGE SIGNAL │
         │          │   CONTINUE   │              │    OUTPUT    │
         │          │   EXPOSURE   │              └──────┬───────┘
         │          └──────┬───────┘                     │ ── S804
         │                 │                             ▼
         │                 │                      ┌──────────────┐
         │                 │                      │  SEND RESET  │
         │                 │                      │   REQUEST    │
         │                 │                      └──────┬───────┘
         │                 │                             │
         └─────────────────┴─────────────────────────────┘
```

# FIG. 9

EP 4 787 311 A1

FIG. 10A

1002

1001

401

1003    1003    1003    1003    1003

1004

FIG. 10B

1021    1022    1023    1024    1025

R    R    R    R    R

1026

## FIG. 11A

921

1121G1    1121R

1121B

1121G2

I — — — I'

1121

m
n⊙ →l

## FIG. 11B

1121B    1121G2    1122

1123

1124

1125

1126    1126
1127    1127

n
m⊙ →l

## FIG. 11C

1110

1111

921

1112

FIG. 12

# FIG. 13

```
                    ┌─────────────────┐
                    │      START      │──S1401
                    └─────────────────┘
                             │
          ┌──────────────────▼──────────────┐
          │              ┌──────────────────┐
          │              │     ACQUIRE      │
          │              │ PIXEL VALUE AND ADD │──S1402
          │              └──────────────────┘
          │                       │
          │              ┌──────────────────┐
          │              │    CALCULATE     │
          │              │  CONTRAST VALUE  │──S1403
          │              └──────────────────┘
          │                       │
          │              ┌──────────────────┐
          │              │ CALCULATE CONTRAST │
          │              │ DETERMINATION VALUE │──S1404
          │              └──────────────────┘
          │                       │
          │                      S1405
          │                 ╱──────────╲
          │                ╱  CONTRAST   ╲        YES
          │               ╱ DETERMINATION  ╲──────────────┐
          │               ╲ VALUE > THRESHOLD╱            │
          │                ╲    VALUE?      ╱             │
          │                 ╲──────────────╱              │
          │                   │ NO                        │
          │            S1408  │                    S1406  │
          │        ┌──────────▼──────┐        ┌───────────▼──────────────┐
          │        │ OUTPUT IMAGE → 0 │        │ TRANSMIT PIXEL VALUE OF  │
          │        └─────────────────┘        │ DISTANCE MEASUREMENT IMAGE │
          │                   │               └──────────────────────────┘
          │                   │                    S1407  │
          │                   │               ┌───────────▼──────────────┐
          │                   │               │  INITIALIZE FRAME BUFFER │
          │                   │               └──────────────────────────┘
          │                   │                           │
          └───────────────────┴───────────────────────────┘
```

Europäisches
Patentamt

European
Patent Office

Office européen
des brevets

# EUROPEAN SEARCH REPORT

Application Number

EP 26 15 0553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 117 939 099 A (CANON KK) 26 April 2024 (2024-04-26) | 1,5,6, 11-13 | INV. G06T7/593 |
| A | * abstract * * paragraph [0001] - paragraph [0004] * * paragraph [0021] - paragraph [0029] * * paragraph [0031] - paragraph [0051] * * paragraph [0054] - paragraph [0059] * ----- | 2-4,7-10 | |
| Y | JP 2021 156579 A (SONY GROUP CORP) 7 October 2021 (2021-10-07) | 1,11-13 | |
| A | * abstract * * paragraph [0003] - paragraph [0009] * * paragraph [0074] - paragraph [0080] * * paragraph [0090] - paragraph [0098] * * paragraph [0106] - paragraph [0114] * ----- | 2-10 | |
| Y | CN 110 298 793 A (SUBARU CORP) 1 October 2019 (2019-10-01) | 1,11-13 | |
| A | * abstract * * paragraph [0010] - paragraph [0022] * * paragraph [0056] - paragraph [0060] * * paragraph [0081] - paragraph [0091] * ----- | 2-10 | TECHNICAL FIELDS SEARCHED (IPC) G06T G06V |
| Y | JP 2011 004088 A (CANON KK) 6 January 2011 (2011-01-06) | 1,5,6, 11-13 | |
| A | * abstract * * paragraph [0012] - paragraph [0015] * * paragraph [0024] - paragraph [0027] * * paragraph [0046] - paragraph [0047] * ----- | 2-4,7-10 | |

The present search report has been drawn up for all claims

| Place of search | Date of completion of the search | Examiner |
|---|---|---|
| Munich | 10 June 2026 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0553

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2026

| Patent document cited in search report | | Publication date | Patent family member(s) | | Publication date |
|---|---|---|---|---|---|
| CN 117939099 | A | 26-04-2024 | CN | 117939099 A | 26-04-2024 |
| | | | EP | 4361557 A1 | 01-05-2024 |
| | | | JP | 7543367 B2 | 02-09-2024 |
| | | | JP | 2024063302 A | 13-05-2024 |
| | | | JP | 2024161036 A | 15-11-2024 |
| | | | US | 2024147087 A1 | 02-05-2024 |
| JP 2021156579 | A | 07-10-2021 | JP | 2021156579 A | 07-10-2021 |
| | | | US | 2021209783 A1 | 08-07-2021 |
| | | | WO | 2020004074 A1 | 02-01-2020 |
| CN 110298793 | A | 01-10-2019 | CN | 110298793 A | 01-10-2019 |
| | | | DE | 102019101482 A1 | 26-09-2019 |
| | | | JP | 6701253 B2 | 27-05-2020 |
| | | | JP | 2019168821 A | 03-10-2019 |
| | | | US | 2019294899 A1 | 26-09-2019 |
| JP 2011004088 | A | 06-01-2011 | JP | 5219933 B2 | 26-06-2013 |
| | | | JP | 2011004088 A | 06-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024153347 A
- JP 2011004088 A
- JP 2025 A
- JP 017150 A